# FASCICULE DE BREVET EUROPEEN

(11) **EP 3 206 149 B1**
(45) Date de publication et mention de la délivrance du brevet: **06.05.2020**
(21) Numéro de dépôt: 17154625.2
(22) Date de dépôt: 03.02.2017
(51) Int. Cl.: G06F 21/31, H04L 29/06

(54) **PROCEDE DE CONTROLE D'UN PARAMETRE INDICATIF D'UN NIVEAU DE CONFIANCE ASSOCIE A UN COMPTE UTILISATEUR D'UN SERVICE EN LIGNE**
VERFAHREN ZUR KONTROLLE EINES INDIKATIVEN PARAMETERS DES GRADS AN VERTRAUEN, DAS EINEM NUTZERKONTO EINES ONLINE-DIENSTES ENTGEGENGEBRACHT WIRD
METHOD FOR MONITORING A PARAMETER INDICATING A LEVEL OF CONFIDENCE ASSOCIATED WITH A USER ACCOUNT OF AN ONLINE SERVICE

(30) Priorité: 09.02.2016 FR 1651028
(43) Date de publication de la demande: 16.08.2017
(73) Titulaire: Idemia Identity & Security France, 92400 Courbevoie (FR)
(72) Inventeur: BAK, Naama, 92130 ISSY LES MOULINEAUX (FR); PICON, Romain, 92130 ISSY LES MOULINEAUX (FR); HUGEL, Rodolphe, 92130 ISSY LES MOULINEAUX (FR)
(74) Mandataire: Cabinet Le Guen Maillet

(56) Documents cités:
- WO-A1-2014/178893
- WO-A2-2012/042276
- US-A1- 2013 036 458

## Description

### DOMAINE TECHNIQUE

La présente invention concerne le domaine des services en ligne, plus particulièrement un procédé d'adaptation d'un paramètre indicatif d'un niveau de confiance associé à un compte utilisateur d'un tel service en ligne.

### ETAT DE LA TECHNIQUE ANTERIEURE

Les services en lignes se développent et concernent de plus en plus des services dits cruciaux, comme par exemple des services en ligne permettant d'accéder à des services bancaires ou fiscaux. Il est primordial de s'assurer de l'identité réelle d'un utilisateur qui ouvre un nouveau compte utilisateur pour de tels services en lignes, afin en particulier d'éviter des cas de fraudes par usurpation d'identité.

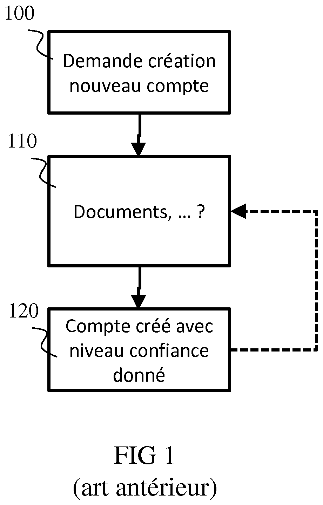

Classiquement, comme illustré dans la **Fig. 1**, une étape de vérification de l'identité d'un utilisateur souhaitant créer un nouveau compte utilisateur pour un tel service en ligne est réalisée lors de la phase de création du nouveau compte utilisateur du service en ligne. Ainsi, suite à une première étape 100 de demande de création d'un nouveau compte utilisateur par un utilisateur, une étape 110 de vérification de l'identité de cet utilisateur est effectuée. Selon le niveau de confiance voulu par le service en ligne sur l'identité de l'utilisateur, l'utilisateur peut se voir demander l'envoi de documents, par exemple des copies de pièces d'identités, ou, afin de s'assurer au mieux de son identité, devoir présenter les originaux de ces documents lors d'un entretien. A l'issu de cette étape de vérification 110, la création du nouveau compte utilisateur est validée (étape 120), mettant fin au procédé de création du nouveau compte utilisateur pour le service en ligne. Le niveau de confiance que ce procédé de création de compte utilisateur offre sur l'identité réelle de l'utilisateur étant à l'origine de la demande de création du nouveau compte dépend de l'étape de vérification 110. Lorsque l'étape de vérification 110 comporte une rencontre entre l'utilisateur et une personne de confiance, ainsi que la fourniture de divers documents originaux, un plus grand niveau de confiance sur l'identité de l'utilisateur est accordé que pour un procédé s'appuyant sur une étape de vérification 110 purement déclarative, c'est-à-dire reposant seulement sur les seules déclarations de l'utilisateur. Par contre, l'étape de vérification 110 peut alors être vécue par l'utilisateur comme particulièrement contraignante, si celui-ci doit prendre un rendez-vous ou se déplacer pour s'y soumettre. Certains procédés de vérification de l'identité de l'utilisateur d'un nouveau compte utilisateur fonctionnent de façon itérative. Ils permettent la création d'un nouveau compte utilisateur après une première étape de vérification 110 peu contraignante, par exemple purement déclarative ou moyennant l'envoi d'une copie d'un document par courrier électronique. Un tel compte utilisateur se voit alors associé lors de sa création à un paramètre indicatif d'un niveau de confiance de valeur faible. Dans ce cas, le compte utilisateur n'a pas un accès à la totalité des services offerts par le service en ligne. Par exemple, un tel compte utilisateur nouvellement créé peut seulement accéder en consultation à des services bancaires en ligne. L'utilisateur d'un tel compte utilisateur doit donc se soumettre à une seconde étape 110 de vérification de son identité, plus contraignante. Cette seconde étape de vérification 110 peut consister en un entretien téléphonique. A l'issu de cette seconde étape de vérification 110, le niveau de confiance associé au compte utilisateur est augmenté, permettant alors un accès à la totalité des services offerts par le service en ligne. Il est ainsi possible d'avoir plusieurs itérations de l'étape de vérification 110, le niveau de confiance sur l'identité de l'utilisateur associé au compte utilisateur pouvant alors prendre une valeur parmi plusieurs valeurs possibles, en fonction des critères de vérification remplis lors de chaque itération de l'étape de vérification 110. Le compte utilisateur peut avoir accès à différents services du service en ligne en fonction du niveau de confiance associé au compte utilisateur. Ce procédé de création d'un nouveau compte utilisateur par un utilisateur s'appuie néanmoins sur une ou plusieurs étapes de vérification de l'identité de l'utilisateur qui peuvent être particulièrement contraignantes pour l'utilisateur. Une étape de vérification comprenant un entretien peut par exemple obliger l'utilisateur à se déplacer, ce qui peut être problématique pour un utilisateur vivant à l'étranger. L'organisation d'entretiens nécessite la mise en place d'une logistique, ce qui a un coût de mise en œuvre, et peut nécessiter le recrutement et la formation de personnes conduisant les entretiens.

Il est donc nécessaire de proposer un procédé permettant d'obtenir un bon niveau de confiance sur l'identité d'utilisateur ayant créé un compte utilisateur sans présenter les inconvénients mentionnés ci-dessus. Les documents WO 2014/178893, WO 2012/042276 et US 2013/036458 font partie de l'état de la technique.

### EXPOSE DE L'INVENTION

L'invention est définie par les revendications jointes. La présente invention concerne un procédé de contrôle de la valeur d'un paramètre indicatif d'un niveau de confiance associé à un premier compte utilisateur d'un service en ligne, chaque compte utilisateur du service en ligne comprenant des données utilisateur et un moyen de contact associés permettant d'entrer en contact avec un utilisateur dudit compteur utilisateur, le procédé étant exécuté par au moins un serveur hébergeant le service en ligne. Le procédé comprend les étapes de sélectionner au moins un deuxième compte utilisateur du service en ligne, générer un premier code pour chaque deuxième compte utilisateur du service en ligne, enregistrer le premier code en association avec le premier compte utilisateur du service en ligne, émettre un premier message via un moyen de contact associé au deuxième compte utilisateur du service en ligne, le premier message comprenant le premier code généré et les des étapes ultérieures de recevoir, à partir d'un premier dispositif électronique connecté au service en ligne avec le premier compte utilisateur du service en ligne, un deuxième message comprenant un deuxième code, quand le deuxième code est égal au premier code enregistré en association avec le premier compte utilisateur du service en ligne, alors, augmenter la valeur du paramètre indicatif du niveau de confiance associé au premier compte utilisateur du service en ligne.

Avantageusement, le procédé met à contribution les utilisateurs du service en ligne pour augmenter le niveau de confiance associé à un compte utilisateur du service en ligne donné. Le procédé permet d'introduire une notion de cooptation, sponsor ou parrainage entre utilisateurs du service en ligne. Ainsi, afin d'augmenter le niveau de confiance associé au premier compte utilisateur du service en ligne, le premier code est généré et envoyé vers au moins un utilisateur d'un deuxième compte utilisateur du service en ligne. L'utilisateur du deuxième compte utilisateur, s'il connait l'utilisateur du premier compte utilisateur du service en ligne, peut alors transmettre le code reçu à cet utilisateur du premier compte utilisateur s'il souhaite parrainer cet utilisateur du premier compte utilisateur du service en ligne. L'utilisateur du premier compte utilisateur fournit alors au service en ligne, en association avec le premier compte utilisateur, le code reçu de la part de l'utilisateur du deuxième compte utilisateur. Une fois vérifié que le code fourni et le code généré correspondent, c'est-à-dire qu'ils sont égaux, le service en ligne entérine le fait que l'utilisateur du premier compte utilisateur du service en ligne a été reconnu par l'utilisateur du deuxième compte utilisateur du service en ligne en augmentant le niveau de confiance associé au premier compte utilisateur du service en ligne. En fonction de la valeur du niveau de confiance associé au premier compte utilisateur du service en ligne qui a été ainsi obtenue, le service en ligne est capable de déterminer quels services sont effectivement accessibles depuis ce premier compte utilisateur du service en ligne.

Selon un mode de réalisation complémentaire de l'invention, le premier message émis comprend au moins une donnée utilisateur associée au premier compte utilisateur du service en ligne afin de permettre l'identification de l'utilisateur du premier compte utilisateur du service en ligne par l'utilisateur du deuxième compte utilisateur du service en ligne.

Avantageusement, une information choisie parmi des données utilisateur associées au premier compte utilisateur du service en ligne est envoyée avec ledit premier code à l'utilisateur du deuxième compte utilisateur du service en ligne afin que l'utilisateur du deuxième compte utilisateur du service en ligne puisse aisément identifier l'utilisateur du premier compte utilisateur du service en ligne pour décider, ou non, de lui transmettre ledit premier code reçu.

Selon un mode de réalisation complémentaire de l'invention, la sélection du deuxième compte utilisateur du service en ligne comprend les étapes suivantes : recevoir un troisième message d'un deuxième dispositif électronique connecté au service en ligne avec le premier compte utilisateur du service en ligne, le troisième message comprenant des données d'identification permettant la connexion à un compte utilisateur d'un réseau social hébergé par au moins un serveur, le compte utilisateur du réseau social comprenant une liste d'autres comptes utilisateur du réseau social connectés audit compte utilisateur du réseau social, établir une connexion avec au moins le serveur hébergeant le réseau social en utilisant les données d'identification reçues, retrouver, sur le serveur hébergeant le réseau social, des données utilisateur liées aux autres comptes utilisateur du réseau social connectés au compte du réseau social, et sélectionner un deuxième compte utilisateur du service en ligne pour lequel au moins une valeur d'une donnée utilisateur prédéterminée parmi les données utilisateur de ce deuxième compte utilisateur du service en ligne est égale à une valeur d'une donnée utilisateur prédéterminée parmi les données utilisateur retrouvées des autres comptes utilisateur du réseau social.

Avantageusement, la sélection du deuxième compte utilisateur du service en ligne est facilitée, et surtout plus pertinente, en s'appuyant sur un réseau social existant. Selon ce mode de réalisation de l'invention, l'utilisateur du premier compte utilisateur du service en ligne fournit au service en ligne des données d'identification permettant de se connecter à un compte utilisateur dudit réseau social, typiquement un compte utilisateur du réseau social appartenant à l'utilisateur du premier compte utilisateur du service en ligne. Le service en ligne, c'est-à-dire le serveur hébergeant le service en ligne, peut alors se connecter à ce compte utilisateur du réseau social en utilisant lesdites données d'identification et obtenir du réseau social une liste de contacts associés audit compteur utilisateur du réseau social. Le service en ligne, c'est-à-dire le serveur hébergeant le service en ligne, peut alors rechercher parmi ses propres comptes utilisateurs un compte utilisateur du service en ligne correspondant à un contact, d'après le réseau social, de l'utilisateur du premier compte utilisateur. Le premier code est alors envoyé à l'utilisateur de ce compte utilisateur. Le fait que les utilisateurs des comptes utilisateur soient connectés via le réseau social améliore la pertinence de la demande de cooptation, et permet ainsi de réduire drastiquement l'envoi de tels premiers messages à des utilisateurs non pertinents. Cela permet donc de réduire de façon globale le nombre de messages émis par le serveur hébergeant le service en ligne, préservant ainsi la bande passante. Cela permet aussi de réduire le nombre de messages reçus par les utilisateurs du service en ligne, évitant en particulier que les messages ne soient au final considérés comme des messages non sollicités (« *spam* » en anglais) et donc ignorés.

Selon un mode de réalisation complémentaire de l'invention, la sélection d'au moins un deuxième compte utilisateur du service en ligne comprend les étapes suivantes : sélectionner au moins un compte utilisateur du service en ligne dont une donnée utilisateur est égale à une donnée utilisateur du premier compte utilisateur du service en ligne, émettre un message comprenant ladite sélection de comptes utilisateur du service en ligne vers le premier dispositif, de sorte à présenter à l'utilisateur du premier compte utilisateur du service en ligne ladite sélection de comptes utilisateur du service en ligne sur une interface graphique du premier dispositif, et recevoir un message en provenance du premier dispositif électronique comprenant une indication du choix fait par l'utilisateur d'au moins un deuxième compte utilisateur du service en ligne parmi ladite sélection.

Avantageusement, le serveur hébergeant le service en ligne sélectionne parmi des comptes utilisateur du service en ligne ceux qui partagent une correspondance avec le premier compte utilisateur du service en ligne, par exemple une localisation, un nom, une société ou autre information comprise dans les données utilisateur. Cette sélection est présentée à l'utilisateur du premier compte utilisateur du service en ligne qui peut alors faire un choix de deuxième compte utilisateur du service en ligne vers qui un code généré est envoyé ensuite. En permettant à l'utilisateur du premier compte utilisateur du service en ligne de cibler au mieux quel utilisateur va être sollicité pour tenter d'augmenter le niveau de confiance associé au premier compte utilisateur du service en ligne, le nombre de messages envoyés est réduit.

Selon un mode de réalisation de l'invention, la sélection du deuxième compte utilisateur du service en ligne comprend une étape, préalable aux autres étapes de sélection, de restriction des étapes de sélection aux seuls comptes utilisateurs du service en ligne associés à une valeur d'un paramètre indicatif d'un niveau de confiance supérieure à une valeur prédéterminée.

Avantageusement, une première étape de sélection est réalisée afin de s'assurer que le deuxième compte utilisateur du service en ligne sélectionné au final est associé à un niveau de confiance supérieur à une valeur prédéterminée. Ainsi, seuls des comptes utilisateur du service en ligne considérés comme de confiance peuvent jouer un rôle de cooptation. Cela permet de réduire drastiquement les possibilités d'usurpation d'identité pour un attaquant qui tenterait de créer plusieurs comptes utilisateurs du service en ligne en parallèle afin d'augmenter leurs niveaux de confiance en utilisant le procédé de l'invention entre ces mêmes comptes.

Selon un mode de réalisation de l'invention, le premier code est généré en association avec le premier et le deuxième compte utilisateur du service en ligne, le deuxième message comprenant des données utilisateur et l'augmentation de la valeur du paramètre indicatif du niveau de confiance associé au premier compte utilisateur du service en ligne n'est réalisée que quand le deuxième code est égal au premier code enregistré en association avec le premier compte utilisateur du service en ligne et que les données utilisateur reçues correspondent à des données utilisateur du deuxième compte utilisateur du service en ligne.

Avantageusement, le service en ligne vérifie que le deuxième code est bien fourni en association avec le deuxième compte utilisateur du service en ligne. Cela permet de garantir que l'utilisateur du premier compte utilisateur du service en ligne connait effectivement l'utilisateur du deuxième compte utilisateur du service en ligne.

La présente invention concerne également un serveur hébergeant un service en ligne, le serveur implémentant un procédé de contrôle d'un paramètre indicatif d'un niveau de confiance associé à un premier compte utilisateur du service en ligne, chaque compte utilisateur du service en ligne comprenant des données utilisateur et un moyen de contact associés permettant d'entrer en contact avec un utilisateur dudit compteur utilisateur, le serveur comprenant des moyens pour sélectionner un deuxième compte utilisateur du service en ligne, des moyens pour générer un premier code, des moyens pour enregistrer le premier code en association avec le premier compte utilisateur du service en ligne, des moyens pour émettre un premier message via un moyen de contact associé au deuxième compte utilisateur du service en ligne, le premier message comprenant le premier code généré, des moyens pour recevoir, à partir d'un premier dispositif électronique connecté au service en ligne avec le premier compte utilisateur du service en ligne, un deuxième message comprenant un deuxième code, des moyens pour déterminer quand le deuxième code est égal au premier code enregistré en association avec le premier compte utilisateur, et des moyens pour augmenter la valeur du paramètre indicatif du niveau de confiance associé au premier compte utilisateur du service en ligne.

La présente invention concerne également un programme d'ordinateur comprenant des instructions pour mettre en œuvre, par un processeur, le procédé de contrôle d'un paramètre indicatif d'un niveau de confiance associé à un premier compte utilisateur d'un service en ligne tel que décrit dans le présent document, lorsque ledit programme d'ordinateur est exécuté par ledit processeur.

La présente invention concerne également des moyens de stockage stockant ledit programme d'ordinateur.

### DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la **Fig. 1** est une illustration d'un art antérieur permettant la création d'un compte utilisateur d'un service en ligne et d'un paramètre associé indicatif d'un niveau de confiance ;
la **Fig. 2** est une représentation schématique d'un procédé de contrôle d'un paramètre indicatif d'un niveau de confiance associé à un compte utilisateur d'un service en ligne ;
la **Fig. 3** est une illustration schématique d'un exemple d'architecture matérielle d'un serveur pouvant mettre en œuvre l'invention ;
la **Fig. 4** est une illustration, selon un mode de réalisation particulier de l'invention, d'un procédé de contrôle d'un paramètre indicatif d'un niveau de confiance associé à un premier compte utilisateur d'un service en ligne.

### EXPOSE DETAILLE

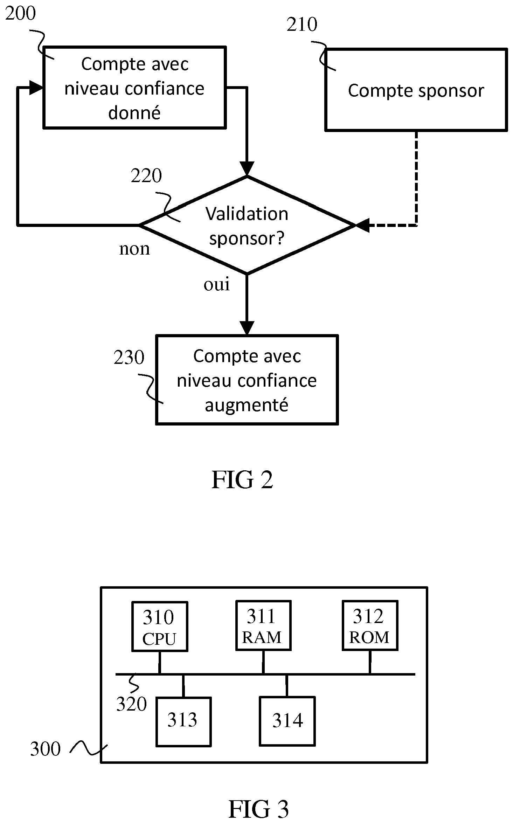

La **Fig. 2** est une représentation schématique d'un procédé de contrôle d'un paramètre indicatif d'un niveau de confiance associé à un compte utilisateur d'un service en ligne. Le service en ligne peut être fourni ou hébergé par un équipement serveur 300, c'est-à-dire un serveur ou plusieurs serveurs interconnectés coopérant, tel que décrit ci-après en relation avec la Fig. 3. Un tel service en ligne peut être un service de type « banque en ligne », « administration en ligne », « courtage ou bourse en ligne », etc. Un utilisateur d'un tel service en ligne accède audit service en ligne sur un dispositif électronique connecté au service en ligne. Le dispositif électronique est typiquement un téléphone intelligent (« *smartphone* » en anglais), un ordinateur, une tablette ou tout dispositif électronique disposant d'un accès à un réseau de communication permettant d'établir une connexion avec le service en ligne, c'est-à-dire avec l'équipement serveur 300 hébergeant ledit service en ligne. La connexion du dispositif électronique au service en ligne se fait avec un compte utilisateur du service en ligne préalablement créé. Un compte utilisateur du service en ligne peut être associé à une personne physique ou à une personne morale, c'est-à-dire *in fine* à un groupe de personnes physiques. Le terme générique « utilisateur » est utilisé ici pour désigner indifféremment ces différents cas. Un compte utilisateur du service en ligne comprend des données d'identification, permettant à un utilisateur de s'authentifier lors de la connexion au service en ligne, typiquement un identifiant (« *login »* en anglais) et un mot de passe. Les données d'identification peuvent comprendre des données biométriques ou tout autre donnée utile à la mise en œuvre d'un procédé d'authentification (mot de passe, clef de chiffrement utilisée pour l'authentification, etc.) Des données utilisateur sont associées à un compte utilisateur du service en ligne. Ces données utilisateur comprennent typiquement des données liées à l'identité d'un utilisateur du compte utilisateur du service en ligne. Les données utilisateur comprennent par exemple un nom, un prénom, une date de naissance, un lieu de naissance, une adresse postale, un numéro de carte d'identité, un numéro fiscal ou toute autre donnée propre au compte utilisateur ou à l'utilisateur du compte utilisateur du service en ligne (par exemple, une liste de comptes bancaires associé à un compte utilisateur du service en ligne dans le cadre d'un service de banque en ligne).

Un ou plusieurs moyens de contact sont associés à chaque compte utilisateur du service en ligne. Par moyen de contact, on entend toute information permettant au service en ligne de d'entrer en contact un utilisateur du service en ligne. Par « contacter », on entend « envoyer un message ». Dit autrement, un moyen de contact peut être de nature différente, par exemple :
- un numéro de téléphone : le service en ligne peut, via un serveur vocal, envoyer des messages vocaux vers un tel numéro,
- un numéro de téléphone « mobile » : le service en ligne peut envoyer des messages courts (« SMS » *Short Message Service* en anglais) vers un numéro de téléphone d'un mobile,
- un numéro de fax : le service en ligne peut envoyer un fax à destination d'un tel numéro,
- une adresse électronique : le service en ligne peut envoyer un message électronique (« *email* » en anglais),
- une adresse postale : le service ne ligne peut automatiser la rédaction et l'envoi de courriers distribués ensuite par un service postal ou coursier,
- tout identifiant d'un service de communication : le service en ligne peut disposer d'un ou plusieurs identifiants sur ce même service de communication afin de pouvoir envoyer un message via ce service de communication (par exemple, service de type « messagerie instantanée », ou « *chat »* en anglais),
- un identifiant interne au service en ligne : le service en ligne peut comprendre un système de messagerie interne permettant l'échange de message entre utilisateurs du service en ligne et/ou l'envoi par le serveur 300 hébergeant le service en ligne de messages à l'attention d'un ou plusieurs utilisateurs, c'est-à-dire vers leurs comptes utilisateurs du service en ligne respectifs.

Un paramètre indicatif d'un niveau de confiance est associé à chaque compte utilisateur du service en ligne. Un tel paramètre est une représentation du niveau de confiance accordé à l'identité réelle de l'utilisateur dudit compte utilisateur du service en ligne vis-à-vis d'une identité déclarée du compte utilisateur du service en ligne lors de la création du compte utilisateur du service en ligne. L'identité déclarée d'un compte utilisateur d'un service en ligne correspond par exemple aux noms et prénoms compris dans les données utilisateur dudit compte utilisateur du service en ligne, ou à une raison sociale pour une société. Ces données utilisateur sont fournie par l'utilisateur à l'origine de la création du compte utilisateur du service en ligne, et sont vérifiées, ou non, lors de l'étape de vérification 110 précédemment décrite Le niveau de confiance de chaque compte utilisateur du service en ligne est indépendant du procédé d'authentification utilisé pour se connecter audit compte utilisateur du service en ligne. Un utilisateur dont l'identité a été vérifié de façon robuste, et donc dont le niveau de confiance associé au compte utilisateur du service en ligne est élevé, peut se connecter à son compte utilisateur sur le service en ligne via une méthode d'authentification faible. De même, un utilisateur ayant créé un compte utilisateur du service en ligne sur une base seulement déclarative, et ayant donc un niveau de confiance associé au compte utilisateur du service en ligne faible, peut se connecter à son compte utilisateur du service en ligne avec des méthodes très robustes (biométrie, etc.). Par convention, un haut niveau de confiance est associé à une valeur comparativement élevée du paramètre indicatif du niveau de confiance. Un autre choix, purement conventionnel, peut être fait.

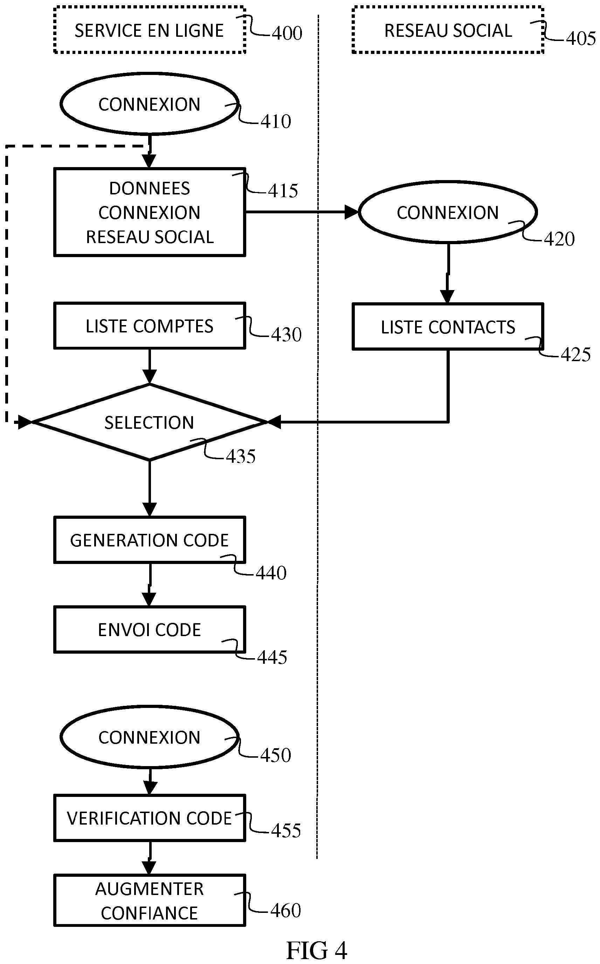

Le procédé de contrôle du paramètre indicatif du niveau de confiance associé à un premier compte utilisateur du service en ligne, qui est illustré schématiquement en **Fig. 2**, est exécuté par l'équipement serveur 300 hébergeant le service en ligne. Un mode de réalisation particulier est détaillé ci-après en relation avec la description de la Fig. 4. Dans une étape 200, un premier compte utilisateur du service en ligne est associé à une première valeur du paramètre indicatif d'un niveau de confiance. Il peut s'agir par exemple d'un niveau de confiance bas (valeur relativement faible du paramètre indicatif du niveau de confiance), donné par défaut à tout compte utilisateur du service en ligne nouvellement créé. Le serveur 300 sélectionne un deuxième compte utilisateur du service en ligne dans une étape 210. Le deuxième compte utilisateur du service en ligne est dit « compte sponsor » ou « compte parrain ». La sélection de ce deuxième compte utilisateur du service en ligne parmi les comptes utilisateur du service en ligne peut se faire selon divers procédés. La sélection peut ainsi être le fruit du hasard ou être faite selon un des modes de réalisation décrits ci-après en relation avec la Fig. 4. Le serveur 300 génère ensuite un code, qui est enregistré par le serveur 300 en association avec le premier compte utilisateur du service en ligne. Le serveur émet un message, comprenant le code généré, en utilisant le moyen de contact associé au deuxième compte utilisateur du service en ligne. Dit autrement, le service en ligne fournit à un utilisateur du deuxième compte utilisateur du service en ligne le code généré. Charge alors, si l'utilisateur du deuxième compte utilisateur du service en ligne connait l'utilisateur du premier compte utilisateur du service en ligne, et si l'utilisateur du deuxième compte utilisateur du service en ligne souhaite valider l'identité de cet utilisateur du premier compte utilisateur du service en ligne, de fournir le code reçu à cet utilisateur du premier compte utilisateur du service en ligne. Sans indication relative à l'identité de l'utilisateur du premier compte utilisateur du service en ligne, l'utilisateur du deuxième compte utilisateur du service en ligne peut devoir attendre d'être sollicité par l'utilisateur du premier compte utilisateur du service en ligne et confirmer avec lui que le code reçu correspond bien à une demande de vérification du premier compte utilisateur du service en ligne. Charge là encore à l'utilisateur du deuxième compte utilisateur du service en ligne d'accepter ou non de fournir le code à l'utilisateur du premier compte utilisateur du service en ligne. C'est la fourniture ou non du code par le sponsor (l'utilisateur du deuxième compte utilisateur du service en ligne) à l'utilisateur du premier compte utilisateur du service en ligne qui permet ensuite à l'utilisateur du premier compte utilisateur du service en ligne de valider une étape 220 de validation. En effet, une fois le code transmis à l'utilisateur du premier compte utilisateur du service en ligne, celui-ci peut se connecter au service en ligne et entrer le code reçu. Cette opération est réalisée à partir d'un dispositif électronique connecté au serveur avec le premier compte utilisateur du service en ligne. Le serveur 300 reçoit un message, émis par le dispositif, comprenant le code entré. Le serveur 300 vérifie ensuite que ce code entré, reçu dans le message, est égal au code enregistré en association avec le premier compte utilisateur du service en ligne. Si c'est le cas, cela signifie que le sponsor a bien validé l'identité de l'utilisateur du premier compte utilisateur du service en ligne en lui transmettant le code, et que le niveau de confiance du premier compte utilisateur du service en ligne peut être augmenté. Dans ce cas, dans une étape 230, le serveur 300 augmente la valeur du paramètre indicatif du niveau de confiance associé au premier compte utilisateur du service en ligne. Le choix fait ici est qu'un haut niveau de confiance dans l'identité d'un utilisateur d'un compte utilisateur du service en ligne correspond à une valeur élevée du paramètre. Tout autre choix conventionnel peut être fait. Des compléments au présent procédé sont détaillés ci-après en relation avec la Fig. 4.

La **Fig. 3** est une illustration schématique d'un exemple d'architecture matérielle d'un serveur 300 pouvant mettre en œuvre l'invention. Le serveur 300 comporte, reliés par un bus de communication 320 : un processeur ou CPU (*Central Processing Unit* en anglais) 310 ; une mémoire vive RAM (*Random Access Memory* en anglais) 311 ; une mémoire morte ROM (*Read Only Memory* en anglais) 312 ; une unité de stockage ou un lecteur de support de stockage, tel qu'un lecteur de cartes SD (*Secure Digital* en anglais) ou un disque dur HDD (*Hard Disk Drive* en anglais) 313 ; et au moins une interface réseau 314 permettant au serveur 300 d'accéder à un réseau de communication permettant de communiquer avec des dispositifs électroniques que les utilisateurs des comptes utilisateur du service ligne accèdent audit service en ligne. L'interface réseau 314 permet par exemple au serveur 300 d'accéder à Internet. Comme le serveur 300 héberge le service en ligne, le serveur 300 exécute au moins une application offrant ledit service en ligne, *i.e.* des fonctionnalités, à des utilisateurs. Possiblement, un utilisateur accède au service en ligne au travers d'un dispositif électronique connecté au serveur 300. La connexion au serveur 300 hébergeant le service en ligne se fait en fournissant des données d'identification correspondant à un compte utilisateur du service en ligne connu du service en ligne. Dit autrement, les données associés aux compte utilisateur du service en ligne peuvent être stockées ou enregistrées par le serveur 300, possiblement dans une unité de stockage 131 ou une base de données distante, hébergée par un autre serveur, et accessible via l'interface réseau 314. Le processeur 310 est capable d'exécuter des instructions chargées dans la RAM 311 à partir de la ROM 312, d'une mémoire ou support de stockage, interne ou externe, 313 ou d'un réseau de communication via l'interface réseau 314. Lorsque le serveur 300 est mis sous tension, le processeur 310 est capable de lire dans la RAM 311 des instructions et de les exécuter. Ces instructions forment un programme d'ordinateur permettant la mise en œuvre ou l'exécution, par le processeur 310, de tout ou partie des procédés et étapes décrits dans le présent document. Ainsi, tout ou partie des procédés et étapes décrits dans le présent document peut être implémenté sous forme logicielle par exécution d'un ensemble d'instructions par une machine programmable, tel qu'un DSP (*Digital Signal Processor* en anglais) ou un microcontrôleur. Tout ou partie des procédés et étapes décrits ci-après peut aussi être implémenté sous forme matérielle par une machine ou un composant dédié, tel qu'un FPGA (*Field-Programmable Gâte Array* en anglais) ou un ASIC (*Application-Specific Integrated Circuit* en anglais).

La **Fig. 4** est une illustration, selon un mode de réalisation particulier de l'invention, d'un procédé de contrôle du paramètre indicatif du niveau de confiance associé au premier compte utilisateur du service en ligne 400. Ce mode de réalisation est conforme au procédé schématiquement illustré en Fig. 2, l'étape de sélection d'un deuxième compte utilisateur du service en ligne 400 étant plus particulièrement détaillée selon un mode de réalisation particulier. Ce mode de réalisation particulier repose sur l'utilisation d'un deuxième service en ligne 405 de type réseau social. Un réseau social est un type de service en ligne dans lequel les utilisateurs peuvent créer des comptes utilisateurs du réseau social et qui offre des services afin que les utilisateurs puissent créer des liens ou connexions entre ces comptes utilisateur du réseau social, ces liens étant représentatifs de liens sociaux (groupe d'amis, famille, liens professionnels, etc.). Un réseau social peut offrir d'autres types de services (messagerie, partage de contenu, etc.). Un réseau social correspond à un service en ligne fourni par au moins une application hébergée par au moins un serveur.

Dans une première étape 410, un utilisateur du premier compte utilisateur du service en ligne 400 se connecte à partir d'un premier dispositif électronique (par exemple un *smartphone,* un ordinateur ou une tablette électronique) au service en ligne 400, c'est-à-dire à un serveur 300 hébergeant le service ne ligne. Dit autrement, l'utilisateur utilise le premier dispositif électronique en exécutant par exemple une application dédiée au service en ligne 400 ou un logiciel dit « navigateur web » (*web browser* en anglais), pour connecter ce premier dispositif électronique au serveur 300 hébergeant le service en ligne 400 avec le premier compte utilisateur du service en ligne. Par « connecter avec le premier compte utilisateur du service en ligne 400 », il faut comprendre que l'utilisateur du premier compte utilisateur du service en ligne 400 fournit au premier dispositif électronique, via une interface homme-machine, les données d'identification associées au premier compte utilisateur du service en ligne 400, et que le premier dispositif électronique s'authentifie auprès du serveur 300 avec ces données d'identification. Le premier dispositif électronique est donc connecté au service en ligne 400, c'est-à-dire au serveur 300, avec le premier compte utilisateur du service en ligne 400.

Dans l'étape 415, le serveur 300 reçoit un premier message du premier dispositif électronique, le premier message comprenant des données d'identification permettant la connexion à un compte utilisateur du réseau social 405, ce compte utilisateur du réseau social 405 comprenant une liste d'autres comptes utilisateur du réseau social 405 connectés audit compte utilisateur du réseau social 405. Dit autrement, l'utilisateur fournit au service en ligne 400 des données d'identification associé au compte utilisateur du réseau social 405 permettant la connexion audit réseau social 405 avec ledit compte utilisateur du réseau social. Typiquement, l'utilisateur entre dans une interface de l'application dédiée exécutée par le premier dispositif électronique (ou d'une interface web affichée par ledit dispositif électronique) un identifiant et un mot de passe permettant de se connecter au réseau social 405 avec le compte utilisateur du réseau social. Le premier dispositif électronique envoie ensuite ces données d'identification (ici un identifiant et mot de passe) au serveur 300 dans le premier message.

Dans une étape 420, le serveur 300 établit une connexion vers le réseau social 405, c'est-à-dire vers le serveur hébergeant l'application fournissant le service en ligne de réseau social, en utilisant les données d'identification reçues dans le premier message. Pour cela, le serveur 300 envoie un message ou requête de connexion, comprenant typiquement les données d'identification (par exemple un identifiant et un mot de passe), vers un serveur hébergeant le réseau social 405, des échanges de messages permettant *in fine* d'établir la connexion.

Dans une étape 425, le serveur 300 retrouve, sur le réseau social 405, c'est-à-dire sur le serveur hébergeant l'application fournissant le service en ligne de réseau social, des données utilisateur liées aux autres comptes utilisateur du réseau social connectés au compte utilisateur du réseau social. Dit autrement, le serveur 300 envoie au réseau social 405, c'est-à-dire vers le serveur hébergeant l'application fournissant le service en ligne de réseau social, une requête afin de recevoir en retour la liste des contacts connectés au compte utilisateur du réseau social 405. La requête utilise par exemple une interface de programmation (ou « *Application Programming Interface* » - API - en anglais) offerte par le réseau social 405. Cette requête peut prendre la forme d'une commande HTTP (« *HyperText Transfer Protocol* » en anglais) de type « GET ». Les données utilisateurs liées aux autres comptes utilisateur du réseau social connectés au compte utilisateur du réseau social sont typiquement les noms et prénoms des utilisateurs de ces comptes. Ces données utilisateurs peuvent aussi comprendre des informations telles des adresses (ou juste une indication de pays, d'une ville, d'un quartier, d'une rue, etc.), des dates de naissance, des lieux de naissance, des lieux de travail actuel ou passé, d'école, d'études suivies, un numéro de carte d'identité, etc. Un paramètre indicatif du degré de connaissance peut aussi être compris dans la liste pour chaque contact retrouvé (famille proche ou éloignée, ami, collègue, relation professionnelle, connaissance, etc.).

Dans une étape 430, le serveur 300 retrouve une liste des comptes utilisateur du service en ligne 400. Cette liste peut comprendre la totalité des comptes utilisateur du service en ligne 400. Selon un mode de réalisation complémentaire de l'invention, le serveur 300 peut ne sélectionner que des comptes utilisateurs du service en ligne 400 associés à une valeur d'un paramètre indicatif d'un niveau de confiance supérieure à une valeur prédéterminée. Ainsi, seuls des comptes utilisateur du service en ligne 400 ayant un niveau de confiance minimal peuvent être sélectionnés comme sponsor. Dit autrement, selon ce mode de réalisation complémentaire, le serveur 300 effectue un premier filtrage de la liste des comptes utilisateur du service en ligne 400 en ne sélectionnant que les comptes utilisateur du services ligne 400 associés à une valeur d'un paramètre indicatif d'un niveau de confiance supérieure à une valeur prédéterminée. Selon un autre mode de réalisation complémentaire de l'invention, le premier filtrage peut aussi porter sur des données utilisateur des comptes utilisateur du service en ligne 400, en ne recherchant par exemple que des comptes utilisateur du service en ligne 400 partageant des données utilisateurs de valeurs égales à des valeurs de données utilisateur du premier compte utilisateur du service en ligne. Par exemple, le serveur 300 peut, lors de cette étape 430, ne retrouver que la liste des comptes utilisateur du service en ligne 400 associés à une donnée utilisateur « pays » ou « ville » de valeur identique à la donnée utilisateur correspondante du premier compte utilisateur du service en ligne 400. Dit autrement, le serveur 300 peut ne sélectionner lors de cette étape 430 que des comptes utilisateur du service en ligne 400 correspondant à des utilisateurs du même pays, de la même ville ou travaillant pour la même société qu'un utilisateur du premier compte utilisateur du service en ligne 400.

Dans une étape 435, le serveur 300 sélectionne parmi les comptes utilisateur du service en ligne 400 retrouvés lors de l'étape 430, éventuellement filtrés comme décrit précédemment, au moins un deuxième compte utilisateur du service en ligne 400 pour lequel au moins une valeur d'une donnée utilisateur prédéterminée parmi les données utilisateur dudit compte utilisateur du service en ligne 400 est égale à une valeur d'une donnée utilisateur prédéterminée parmi les données utilisateur retrouvées des autres comptes utilisateur du réseau social 405. Dit autrement, le serveur 300 établit une correspondance entre une liste des comptes utilisateur du service en ligne 400 et la liste des contacts ou comptes utilisateur du réseau social 405 précédemment reçue afin de retrouver les éléments communs. La correspondance peut s'établir en recherchant des valeurs identiques de données utilisateur des comptes utilisateur du service en ligne 400 et du réseau social 405 telles que « nom et prénom », « nom, prénom et date de naissance », « nom, prénom, pays et ville », « numéro de carte d'identité », etc.

Selon un mode de réalisation complémentaire, le serveur 300 sélectionne au moins un compte utilisateur du service en ligne 400 dont une donnée utilisateur est égale à une donnée utilisateur du premier compte utilisateur du service en ligne 400 puis présente ladite sélection de comptes utilisateur du service en ligne 400 à l'utilisateur du premier compte utilisateur du service en ligne 400. Pour cela, le serveur 300 envoie un message comprenant la sélection de comptes utilisateur du service en ligne 400 vers le premier dispositif électronique. Le premier dispositif électronique présente ensuite dans une interface utilisateur graphique ladite sélection reçue du serveur 300. L'application exécutée par le premier dispositif électronique invite l'utilisateur à choisir un ou plusieurs comptes utilisateur du service en ligne 400 parmi la sélection affichée et retourne le résultat au service en ligne 400, c'est-à-dire au serveur 300. Le serveur 300 reçoit donc un message comprenant une indication du choix fait par l'utilisateur d'au moins un deuxième compte utilisateur du service en ligne 400 parmi la sélection présentée, ce choix correspondant à la sélection d'au moins un deuxième compte utilisateur du service en ligne 400.

Ainsi, les étapes 425, 430 et 435 permettent au serveur 300 de sélectionner au moins un deuxième compte utilisateur du service en ligne 400 correspondant à un utilisateur du réseau social 405 connecté à un utilisateur du premier compte utilisateur du service en ligne 400, éventuellement en permettant à l'utilisateur de sélectionner le deuxième compte utilisateur du service en ligne 400 parmi une sélection de compte utilisateur du service en ligne 400.

Dans une étape 440, le serveur 300 génère un premier code pour chaque deuxième compte utilisateur du service en ligne 400 sélectionné. Le serveur 300 enregistre ce premier code en association avec le premier compte utilisateur du service en ligne 400, par exemple dans une unité de stockage 313.

Dans une étape 445, le serveur 300 émet un deuxième message via un moyen de contact associé au deuxième compte utilisateur du service en ligne 400, le deuxième message comprenant le premier code généré. Selon le moyen de contact, le deuxième message peut être émis selon un procédé différent. Par exemple, si le moyen de contact est une adresse mail, le message peut être émis à destination d'un serveur de messagerie (serveur dit « SMTP », *Simple Mail Transfer Protocol* en anglais) connu du serveur 300. Si le moyen de contact est un numéro de téléphone mobile, la destination du deuxième message peut être un serveur de type SMS-C (*Short Message Service Center* en anglais). Selon un mode de réalisation complémentaire, le deuxième message émis comprend au moins une donnée utilisateur associée au premier compte utilisateur du service en ligne 400 afin de permettre l'identification de l'utilisateur du premier compte utilisateur du service en ligne 400 par l'utilisateur du deuxième compte utilisateur du service en ligne 400. Le deuxième message peut comprendre une information comme un nom et/ou un prénom permettant de faciliter l'identification de l'utilisateur du premier compte utilisateur du service en ligne 400 lorsque le message est reçu et lu par son destinataire.

Les étapes suivantes du procédé ne sont pas réalisées par le serveur 300 mais par les utilisateurs des comptes utilisateur du service en ligne 400 mêmes :
- l'utilisateur destinataire du premier message, c'est-à-dire l'utilisateur du deuxième compte utilisateur du service en ligne 400, reçoit le premier code, éventuellement accompagné d'une information permettant l'identification de l'utilisateur du premier compte cherchant à être sponsorisé,
- cet utilisateur du deuxième compte utilisateur du service en ligne 400 identifie l'utilisateur du premier compte utilisateur du service en ligne 400, soit facilement, car il a reçu un nom avec le premier message, soit en en discutant avec différents utilisateurs. Possiblement, l'utilisateur du premier compte utilisateur du service en ligne 400 peut utiliser un autre canal de communication (une annonce via le réseau social 405 par exemple) pour annoncer que des messages pour le sponsoriser ont été émis. L'utilisateur du deuxième compte utilisateur du service en ligne 400 peut décider ou non de répondre favorablement à la demande de l'utilisateur du premier compte utilisateur du service en ligne 400,
- si l'utilisateur du deuxième compte utilisateur du service en ligne 400 décide d'accepter de sponsoriser l'utilisateur du premier compte utilisateur du service en ligne 400, il transmet, par tout moyen, le premier code à l'utilisateur du premier compte utilisateur du service en ligne 400.

Dans une étape 450, le serveur 300 reçoit une demande de connexion au service en ligne 400 avec le premier compte utilisateur du service en ligne 400 à partir d'un deuxième dispositif électronique, le deuxième dispositif électronique étant possiblement le même dispositif électronique que le premier dispositif électronique.

Dans une étape 455, une interface graphique présentée sur le deuxième dispositif électronique permet, à l'utilisateur du premier compte utilisateur du service en ligne 400, de saisir un deuxième code. Le deuxième code saisi est sensé être un code reçu, par l'utilisateur du premier compte utilisateur du service en ligne 400, d'un utilisateur d'un dit second compte utilisateur du service en ligne 400 désirant le sponsoriser. Le deuxième dispositif électronique émet un troisième message comprenant ce deuxième code vers le serveur 300. Ainsi, le serveur 300 reçoit, à partir du deuxième dispositif électronique connecté au service en ligne 400 avec le premier compte utilisateur du service en ligne 400, le troisième message comprenant le deuxième code.

Dans une étape 460, quand le deuxième code est égal au premier code enregistré en association avec le premier compte utilisateur du service en ligne 400, le serveur 300 augmente la valeur du paramètre indicatif du niveau de confiance associé au premier compte utilisateur du service en ligne 400. Dit autrement, le serveur 300, après avoir vérifié que le code reçu lors de l'étape 455 est égal au code émis lors de l'étape 445, augmente le niveau de confiance associé au premier compte utilisateur du service en ligne 400.

Selon un mode de réalisation complémentaire de l'invention, des données de géolocalisation des dispositifs électroniques utilisés par l'utilisateur du premier compte utilisateur du service en ligne 400 et par l'utilisateur du deuxième compte utilisateur du service en ligne 400 sont comparées afin de s'assurer de la présence physique de ces utilisateurs dans un même endroit lorsque le deuxième code est saisi. Le niveau de confiance n'est alors augmenté que si le deuxième code est égal au premier code enregistré en association avec le premier compte utilisateur du service en ligne 400 et si les données de géolocalisation des deux dispositifs électroniques utilisés indiquent une proximité (par exemple les deux dispositifs électroniques sont distants de moins d'un mètre). Cette vérification supplémentaire permet de s'assurer que les utilisateurs se rencontrent bien physiquement lors de l'échange du code.

Selon un mode de réalisation alternatif de l'invention, lors de l'étape 445, le serveur 300 émet le deuxième message via un moyen de contact associé au deuxième compte utilisateur du service en ligne 400, le deuxième message comprenant le premier code généré, ce premier code généré étant présenté sous la forme d'un code-barres (par exemple un QR code - « *Quick Response code »* en anglais). Ainsi, si l'utilisateur du deuxième compte utilisateur du service en ligne 400 décide d'accepter de sponsoriser l'utilisateur du premier compte utilisateur du service en ligne 400, il présente le code-barres reçu à l'utilisateur du premier compte utilisateur du service en ligne 400. Celui-ci peut alors utiliser le deuxième dispositif électronique pour lire ce code-barres, cette lecture du code-barres remplaçant l'étape 455 de saisie manuelle du deuxième code. Le deuxième dispositif électronique déchiffre le code-barres et envoie ce premier code déchiffré dans le troisième message. Ce procédé permet ainsi de s'assurer la aussi d'une proximité physique des utilisateurs lors de l'étape d'échange du code. Selon un mode de réalisation complémentaire de l'invention, le code-barres comprend le premier code sous une forme chiffrée, la clef de déchiffrement correspondante à ce chiffrement étant envoyée dans un autre message en parallèle au dispositif électronique de l'utilisateur du premier compte. Ainsi, seul ce dispositif est capable de lire puis de déchiffrer le code-barres.

Selon un mode de réalisation complémentaire, lors de l'étape 440 le premier code est généré en association avec le premier compte utilisateur du service en ligne 400 et le deuxième compte utilisateur du service en ligne 400. De plus, le troisième message reçu lors de l'étape 455 comprend des données utilisateur. Le serveur 300 vérifie que les données utilisateur reçues dans le troisième message sont égales à des données utilisateur du deuxième compte utilisateur du service en ligne. Dit autrement, lorsque l'utilisateur du deuxième dispositif électronique saisit le deuxième code dans l'interface graphique, le deuxième code est associé à des données utilisateur (nom, prénom, etc.) correspondant à l'utilisateur qui a fourni le deuxième code à l'utilisateur du premier compte utilisateur du service en ligne 400. Il n'est ainsi pas possible lors de l'étape 455 de rentrer des codes au hasard en espérant tomber sur un code réellement généré puisque des données utilisateur correspondant au deuxième compte utilisateur du service en ligne 400 doivent être simultanément fournies.

Selon un mode de réalisations de l'invention complémentaire, le serveur 300, lors de l'étape 435 de sélection du deuxième compte du service en ligne 400, ajoute des critères de sélection parmi les suivants :
- la valeur du paramètre indicatif d'un niveau de confiance associé au deuxième compte utilisateur du service en ligne 400 est supérieure à une valeur prédéterminée,
- alternativement, ou de façon complémentaire, ladite valeur du paramètre indicatif d'un niveau de confiance associé au deuxième compte utilisateur du service en ligne 400 est plus élevée que la valeur du paramètre indicatif d'un niveau de confiance associé au premier compte utilisateur du service en ligne 400.

## Revendications

1. Procédé de contrôle de la valeur d'un paramètre indicatif d'un niveau de confiance associé à un premier compte utilisateur d'un service en ligne (400), chaque compte utilisateur du service en ligne comprenant des données utilisateur et un moyen de contact associés permettant d'entrer en contact avec un utilisateur dudit compte utilisateur, le procédé étant exécuté par au moins un serveur (300) hébergeant le service en ligne, le procédé comprenant les étapes de :
- recevoir un premier message (415) d'un premier dispositif électronique connecté au service en ligne avec le premier compte utilisateur du service en ligne, le premier message comprenant des données d'identification permettant la connexion à un compte utilisateur d'un réseau social (405) hébergé par au moins un serveur, le compte utilisateur du réseau social comprenant une liste d'autres comptes utilisateur du réseau social connectés audit compte utilisateur du réseau social,
- établir une connexion (420) avec au moins le serveur hébergeant le réseau social en utilisant les données d'identification reçues,
- retrouver (425), sur le serveur hébergeant le réseau social, des données utilisateur liées aux autres comptes utilisateur du réseau social connectés au compte du réseau social, et,
- sélectionner (435) un deuxième compte utilisateur du service en ligne pour lequel au moins une valeur d'une donnée utilisateur prédéterminée parmi les données utilisateur de ce deuxième compte utilisateur du service en ligne est égale à une valeur d'une donnée utilisateur prédéterminée parmi les données utilisateur retrouvées des autres comptes utilisateur du réseau social,
- générer un premier code (440) pour chaque deuxième compte utilisateur du service en ligne,
- enregistrer le premier code (440) en association avec le premier compte utilisateur du service en ligne,
- émettre un deuxième message (445) via un moyen de contact associé au deuxième compte utilisateur du service en ligne, le deuxième message comprenant le premier code généré,
et les étapes ultérieures de :
- recevoir (455), à partir d'un deuxième dispositif électronique connecté au service en ligne avec le premier compte utilisateur du service en ligne, un troisième message comprenant un deuxième code,
- quand (460) le deuxième code est égal au premier code enregistré en association avec le premier compte utilisateur du service en ligne, alors,
- augmenter (460) la valeur du paramètre indicatif du niveau de confiance associé au premier compte utilisateur du service en ligne.

2. Procédé selon la revendication précédente, le deuxième message émis comprenant au moins une donnée utilisateur associée au premier compte utilisateur du service en ligne afin de permettre l'identification de l'utilisateur du premier compte utilisateur du service en ligne par l'utilisateur du deuxième compte utilisateur du service en ligne.

3. Procédé selon l'une des revendications 1 ou 2, la sélection d'au moins un deuxième compte utilisateur du service en ligne comprenant les étapes suivantes :
- sélectionner au moins un compte utilisateur du service en ligne dont une donnée utilisateur est égale à une donnée utilisateur du premier compte utilisateur du service en ligne,
- émettre un message comprenant ladite sélection de comptes utilisateur du service en ligne vers le premier dispositif, de sorte à présenter à l'utilisateur du premier compte utilisateur du service en ligne ladite sélection de comptes utilisateur du service en ligne sur une interface graphique du premier dispositif, et,
- recevoir un message en provenance du premier dispositif électronique comprenant une indication du choix fait par l'utilisateur d'au moins un deuxième compte utilisateur du service en ligne parmi ladite sélection.

4. Procédé selon l'une des revendications 1 à 3, la sélection du deuxième compte utilisateur du service en ligne comprenant une étape, préalable aux autres étapes de sélection, de restriction des étapes de sélection aux seuls comptes utilisateurs du service en ligne associés à une valeur d'un paramètre indicatif d'un niveau de confiance supérieure à une valeur prédéterminée.

5. Procédé selon l'une des revendications 1 à 4, le premier code étant généré en association avec le premier et le deuxième compte utilisateur du service en ligne, le troisième message comprenant des données utilisateur, l'augmentation de la valeur du paramètre indicatif du niveau de confiance associé au premier compte utilisateur du service en ligne n'étant réalisée que quand le deuxième code est égal au premier code enregistré en association avec le premier compte utilisateur du service en ligne et que les données utilisateur reçues correspondent à des données utilisateur du deuxième compte utilisateur du service en ligne.

6. Serveur (300) hébergeant un service en ligne (400), le serveur implémentant un procédé de contrôle d'un paramètre indicatif d'un niveau de confiance associé à un premier compte utilisateur du service en ligne, chaque compte utilisateur du service en ligne comprenant des données utilisateur et un moyen de contact associés permettant d'entrer en contact avec un utilisateur dudit compte utilisateur, le serveur comprenant :
- des moyens pour recevoir un premier message (415) d'un premier dispositif électronique connecté au service en ligne avec le premier compte utilisateur du service en ligne, le premier message comprenant des données d'identification permettant la connexion à un compte utilisateur d'un réseau social (405) hébergé par au moins un serveur, le compte utilisateur du réseau social comprenant une liste d'autres comptes utilisateur du réseau social connectés audit compte utilisateur du réseau social,
- des moyens pour établir une connexion (420) avec au moins le serveur hébergeant le réseau social en utilisant les données d'identification reçues,
- des moyens pour retrouver (425), sur le serveur hébergeant le réseau social, des données utilisateur liées aux autres comptes utilisateur du réseau social connectés au compte du réseau social, et,
- des moyens pour sélectionner (435) un deuxième compte utilisateur du service en ligne pour lequel au moins une valeur d'une donnée utilisateur prédéterminée parmi les données utilisateur de ce deuxième compte utilisateur du service en ligne est égale à une valeur d'une donnée utilisateur prédéterminée parmi les données utilisateur retrouvées des autres comptes utilisateur du réseau social,
- des moyens pour générer un premier code,
- des moyens pour enregistrer le premier code en association avec le premier compte utilisateur du service en ligne,
- des moyens pour émettre un deuxième message via un moyen de contact associé au deuxième compte utilisateur du service en ligne, le deuxième message comprenant le premier code généré,
- des moyens pour recevoir, à partir d'un deuxième dispositif électronique connecté au service en ligne avec le premier compte utilisateur du service en ligne, un troisième message comprenant un deuxième code,
- des moyens pour déterminer quand le deuxième code est égal au premier code enregistré en association avec le premier compte utilisateur, et,
- des moyens pour augmenter la valeur du paramètre indicatif du niveau de confiance associé au premier compte utilisateur du service en ligne.

7. Programme d'ordinateur, **caractérisé en ce qu'**il comprend des instructions pour mettre en œuvre, par un processeur (310) d'un serveur (300) hébergeant un service en ligne (400), le procédé de contrôle d'un paramètre indicatif d'un niveau de confiance associé à un premier compte utilisateur du service en ligne selon l'une quelconque des revendications 1 à 5, lorsque ledit programme d'ordinateur est exécuté par ledit processeur.

8. Moyen de stockage, lisible par un serveur (300), **caractérisé en ce qu'**il stocke un programme d'ordinateur selon la revendication précédente.

## Patentansprüche

1. Verfahren zur Kontrolle des Werts eines einen mit einem ersten Benutzerkonto eines Online-Diensts (400) verknüpften Vertrauensgrad anzeigenden Parameters, wobei jedes Benutzerkonto des Online-Diensts verknüpfte Benutzerdaten und eine Kontakteinrichtung enthält, die es ermöglichen, mit einem Benutzer des Benutzerkontos in Kontakt zu treten, wobei das Verfahren von mindestens einem den Online-Dienst hostenden Server (300) ausgeführt wird, wobei das Verfahren die folgenden Schritte enthält:
- Empfang einer ersten Nachricht (415) von einer mit dem Online-Dienst verbundenen ersten elektronischen Vorrichtung mit dem ersten Benutzerkonto des Online-Diensts, wobei die erste Nachricht Identifikationsdaten enthält, die die Verbindung mit einem Benutzerkonto eines von mindestens einem Server gehosteten sozialen Netzwerks (405) erlauben, wobei das Benutzerkonto des sozialen Netzwerks eine Liste anderer Benutzerkonten des sozialen Netzwerks enthält, die mit dem Benutzerkonto des sozialen Netzwerks verbunden sind,
- Aufbau einer Verbindung (420) mit mindestens dem das soziale Netzwerk hostenden Server unter Verwendung der empfangenen Identifikationsdaten,
- Finden (425) von mit den anderen mit dem Konto des sozialen Netzwerks verbundenen Benutzerkonten des sozialen Netzwerks verknüpften Benutzerdaten auf dem das soziale Netzwerk hostenden Server, und
- Auswahl (435) eines zweiten Benutzerkontos des Online-Diensts, für das mindestens ein Wert eines vorbestimmten Benutzerdatenwerts unter den Benutzerdaten dieses zweiten Benutzerkontos des Online-Diensts gleich einem Wert eines vorbestimmten Benutzerdatenwerts unter den gefundenen Benutzerdaten der anderen Benutzerkonten des sozialen Netzwerks ist,
- Generieren eines ersten Codes (440) für jedes zweite Benutzerkonto des Online-Diensts,
- Speichern des ersten Codes (440) in Verknüpfung mit dem ersten Benutzerkontos des Online-Diensts,
- Senden einer zweiten Nachricht (445) über eine mit dem zweiten Benutzerkonto des Online-Diensts verknüpfte Kontakteinrichtung, wobei die zweite Nachricht den ersten generierten Code enthält,
und die späteren Schritte:
- Empfang (455) einer einen zweiten Code enthaltenden dritten Nachricht ausgehend von einer mit dem Online-Dienst verbundenen zweiten elektronischen Vorrichtung mit dem ersten Benutzerkonto des Online-Diensts,
- wenn (460) der zweite Code gleich dem in Verknüpfung mit dem ersten Benutzerkonto des Online-Diensts gespeicherten ersten Code ist, dann
- Erhöhen (460) des Werts des den mit dem ersten Benutzerkonto des Online-Diensts verknüpften Vertrauensgrad anzeigenden Parameters.

2. Verfahren nach dem vorhergehenden Anspruch, wobei die zweite gesendete Nachricht mindestens einen mit dem ersten Benutzerkonto des Online-Diensts verknüpften Benutzerdatenwert enthält, um die Identifizierung des Benutzers des ersten Benutzerkontos des Online-Diensts durch den Benutzer des zweiten Benutzerkontos des Online-Diensts zu erlauben.

3. Verfahren nach einem der Ansprüche 1 oder 2, wobei die Auswahl mindestens eines zweiten Benutzerkontos des Online-Diensts die folgenden Schritte enthält:
- Auswahl mindestens eines Benutzerkontos des Online-Diensts, von dem ein Benutzerdatenwert gleich einem Benutzerdatenwert des ersten Benutzerkontos des Online-Diensts ist,
- Senden einer die Auswahl von Benutzerkonten des Online-Diensts enthaltenden Nachricht an die erste Vorrichtung, um dem Benutzer des ersten Benutzerkontos des Online-Diensts die Auswahl von Benutzerkonten des Online-Diensts auf einer grafischen Schnittstelle der ersten Vorrichtung zu präsentieren, und
- Empfang einer Nachricht ausgehend von der ersten elektronischen Vorrichtung, die eine Anzeige der vom Benutzer getätigten Wahl mindestens eines zweiten Benutzerkontos des Online-Diensts unter der Auswahl enthält.

4. Verfahren nach einem der Ansprüche 1 bis 3, wobei die Auswahl des zweiten Benutzerkontos des Online-Diensts einen Schritt vor den anderen Auswahlschritten der Beschränkung der Auswahlschritte nur auf die Benutzerkonten des Online-Diensts enthält, die mit einem Wert eines einen Vertrauensgrad höher als ein vorbestimmter Wert anzeigenden Parameters verknüpft sind.

5. Verfahren nach einem der Ansprüche 1 bis 4, wobei der erste Code in Verknüpfung mit dem ersten und zweiten Benutzerkonto des Online-Diensts generiert wird, wobei die dritte Nachricht Benutzerdaten enthält, wobei die Erhöhung des Werts des den mit dem Benutzerkonto des Online-Diensts verknüpften ersten Vertrauensgrad anzeigenden Parameters nur durchgeführt wird, wenn der zweite Code gleich dem in Verknüpfung mit dem ersten Benutzerkonto des Online-Diensts gespeicherten ersten Code ist und die empfangenen Benutzerdaten Benutzerdaten des zweiten Benutzerkontos des Online-Diensts entsprechen.

6. Server (300), der einen Online-Dienst (400) hostet, wobei der Server ein Verfahren zur Kontrolle eines Parameters implementiert, der einen mit einem ersten Benutzerkonto des Online-Diensts verknüpften Vertrauensgrad anzeigt, wobei jedes Benutzerkonto des Online-Diensts verknüpfte Benutzerdaten und eine Kontakteinrichtung enthält, die es ermöglichen, mit einem Benutzer des Benutzerkonto in Kontakt zu treten, wobei der Server enthält:
- Einrichtungen zum Empfang einer ersten Nachricht (415) von einer mit dem Online-Dienst verbundenen ersten elektronischen Vorrichtung mit dem ersten Benutzerkonto des Online-Diensts, wobei die erste Nachricht Identifikationsdaten enthält, die die Verbindung mit einem Benutzerkonto eines von mindestens einem Server gehosteten sozialen Netzwerks (405) erlauben, wobei das Benutzerkonto des sozialen Netzwerks eine Liste anderer Benutzerkonten des sozialen Netzwerks enthält, die mit dem Benutzerkonto des sozialen Netzwerks verbunden sind,
- Einrichtungen zum Aufbau einer Verbindung (420) mit mindestens dem das soziale Netzwerk hostenden Server unter Verwendung der empfangenen Identifikationsdaten,
- Einrichtungen zum Finden (425) von mit den anderen mit dem Konto des sozialen Netzwerks verbundenen Benutzerkonten des sozialen Netzwerks verknüpften Benutzerdaten auf dem das soziale Netzwerk hostenden Server, und
- Einrichtungen zur Auswahl (435) eines zweiten Benutzerkontos des Online-Diensts, für das mindestens ein Wert eines vorbestimmten Benutzerdatenwerts unter den Benutzerdaten dieses zweiten Benutzerkontos des Online-Diensts gleich einem Wert eines vorbestimmten Benutzerdatenwerts unter den gefundenen Benutzerdaten der anderen Benutzerkonten des sozialen Netzwerks ist,
- Einrichtungen zum Generieren eines ersten Codes,
- Einrichtungen zum Speichern des ersten Codes in Verknüpfung mit dem ersten Benutzerkonto des Online-Diensts,
- Einrichtungen zum Senden einer zweiten Nachricht über eine mit dem zweiten Benutzerkonto des Online-Diensts verknüpfte Kontakteinrichtung, wobei die zweite Nachricht den generierten ersten Code enthält,
- Einrichtungen zum Empfang einer einen zweiten Code enthaltenden dritten Nachricht ausgehend von einer mit dem Online-Dienst verbundenen zweiten elektronischen Vorrichtung mit dem ersten Benutzerkonto des Online-Diensts,
- Einrichtungen zur Bestimmung, wann der zweite Code gleich dem in Verknüpfung mit dem ersten Benutzerkonto gespeicherten ersten Code ist, und
- Einrichtungen zur Erhöhung des Werts des den mit dem ersten Benutzerkonto des Online-Diensts verknüpften Vertrauensgrad anzeigenden Parameters.

7. Computerprogramm, **dadurch gekennzeichnet, dass** es Anweisungen enthält, um durch einen Prozessor (310) eines einen Online-Dienst (400) hostenden Servers (300) das Verfahren zur Kontrolle eines einen mit einem ersten Benutzerkonto des Online-Diensts verknüpften Vertrauensgrad anzeigenden Parameters durchzuführen, nach einem der Ansprüche 1 bis 5, wenn das Computerprogramm vom Prozessor ausgeführt wird.

8. Speichereinrichtung, von einem Server (300) lesbar, **dadurch gekennzeichnet, dass** sie ein Computerprogramm nach dem vorhergehenden Anspruch speichert.

## Claims

1. Method for monitoring the value of a parameter indicative of a trust level associated with a first user account of an online service (400), each user account of the online service comprising user data and a contact means which are associated with one another, allowing a user of said user account to be contacted, the method being executed by at least one server (300) that hosts the online service, the method comprising the steps of:
- receiving a first message (415) from a first electronic device connected to the online service with the first user account of the online service, the first message comprising identification data allowing connection to a user account of a social network (405) hosted by at least one server, the user account of the social network comprising a list of other user accounts of the social network that are connected to said user account of the social network,
- setting up a connection (420) at least to the server that hosts the social network by using the received identification data,
- retrieving (425), on the server that hosts the social network, user data connected to the other user accounts of the social network that are connected to the account of the social network, and
- selecting (435) a second user account of the online service for which at least one value of a predetermined user datum from among the user data of this second user account of the online service is equal to a value of a predetermined user datum from among the retrieved user data of the other user accounts of the social network,
- generating a first code (440) for each second user account of the online service,
- recording the first code (440) in association with the first user account of the online service,
- sending a second message (445) via a contact means associated with the second user account of the online service, the second message comprising the generated first code,
and the subsequent steps of:
- receiving (455), from a second electronic device connected to the online service with the first user account of the online service, a third message comprising a second code,
- if (460) the second code is equal to the first code recorded in association with the first user account of the online service, then
- increasing (460) the value of the parameter indicative of the trust level associated with the first user account of the online service.

2. Method according to the preceding claim, the second message sent comprising at least one user datum associated with the first user account of the online service in order to allow the user of the first user account of the online service to be identified by the user of the second user account of the online service.

3. Method according to either one of Claims 1 and 2, the selection of at least one second user account of the online service comprising the following steps:
- selecting at least one user account of the online service that has a user datum equal to a user datum of the first user account of the online service,
- sending a message comprising said selection of user accounts of the online service to the first device, so as to present the user of the first user account of the online service with said selection of user accounts of the online service on a graphical interface of the first device, and
- receiving a message from the first electronic device comprising an indication of the choice, made by the user, of at least one second user account of the online service from said selection.

4. Method according to one of Claims 1 to 3, the selection of the second user account of the online service comprising a step, prior to the other selection steps, of restricting the selection steps to just those user accounts of the online service that are associated with a value of a parameter indicative of a trust level that is higher than a predetermined value.

5. Method according to one of Claims 1 to 4, the first code being generated in association with the first and the second user account of the online service, the third message comprising user data, the value of the parameter indicative of the trust level associated with the first user account of the online service being increased only if the second code is equal to the first code recorded in association with the first user account of the online service and the received user data correspond to user data of the second user account of the online service.

6. Server (300) that hosts an online service (400), the server implementing a method for monitoring a parameter indicative of a trust level associated with a first user account of the online service, each user account of the online service comprising user data and a contact means which are associated with one another, allowing a user of said user account to be contacted, the server comprising:
- means for receiving a first message (415) from a first electronic device connected to the online service with the first user account of the online service, the first message comprising identification data allowing connection to a user account of a social network (405) hosted by at least one server, the user account of the social network comprising a list of other user accounts of the social network that are connected to said user account of the social network,
- means for setting up a connection (420) at least to the server that hosts the social network by using the received identification data,
- means for retrieving (425), on the server that hosts the social network, user data connected to the other user accounts of the social network that are connected to the account of the social network, and
- means for selecting (435) a second user account of the online service for which at least one value of a predetermined user datum from among the user data of this second user account of the online service is equal to a value of a predetermined user datum from among the retrieved user data of the other user accounts of the social network,
- means for generating a first code,
- means for recording the first code in association with the first user account of the online service,
- means for sending a second message via a contact means associated with the second user account of the online service, the second message comprising the generated first code,
- means for receiving, from a second electronic device connected to the online service with the first user account of the online service, a third message comprising a second code,
- means for determining if the second code is equal to the first code recorded in association with the first user account, and
- means for increasing the value of the parameter indicative of the trust level associated with the first user account of the online service.

7. Computer program, **characterized in that** it comprises instructions for implementing, by means of a processor (310) of a server (300) that hosts an online service (400), the method for monitoring a parameter indicative of a trust level associated with a first user account of the online service according to any one of Claims 1 to 5 when said computer program is executed by said processor.

8. Storage means readable by a server (300), **characterized in that** it stores a computer program according to the preceding claim.
